(19) Europäisches Patentamt

European Patent Office

Office européen des brevets

(11) **EP 1 459 980 B1**

(12) **EUROPÄISCHE PATENTSCHRIFT**

(45) Veröffentlichungstag und Bekanntmachung des Hinweises auf die Patenterteilung:
**05.07.2006 Patentblatt 2006/27**

(51) Int Cl.:
***B64G 1/26*** (2006.01)

(21) Anmeldenummer: **04006196.2**

(22) Anmeldetag: **16.03.2004**

(54) **Verfahren zur rechnergestützten Ermittlung einer treibstoffoptimalen Ansteuerung von Düsen**

Method of computer-assisted determination of a fuel optimum control of nozzles

Procédé de détermination assistée par ordinateur d'un côntrol optimal en propergol des propulseurs

(84) Benannte Vertragsstaaten:
**DE FR GB IT**

(30) Priorität: **18.03.2003 DE 10311779**

(43) Veröffentlichungstag der Anmeldung:
**22.09.2004 Patentblatt 2004/39**

(73) Patentinhaber: **EADS Astrium GmbH**
**81663 München (DE)**

(72) Erfinder: **Zentgraf, Peter, Dr.**
**83109 Grosskarolinenfeld (DE)**

(74) Vertreter: **Ulrich, Thomas**
**c/o EADS Deutschland GmbH,**
**Patentabteilung**
**81663 München (DE)**

(56) Entgegenhaltungen:
**EP-A- 0 977 687**

## Beschreibung

Die vorliegende Erfindung betrifft ein Verfahren zur rechnergestützten Ermittlung einer treibstoffoptimalen Ansteuerung von Düsen. Ein solches Verfahren kann insbesondere zur Ansteuerung von Düsen eines Raumfahrzeuges wie beispielsweise eines Satelliten, einer Raumsonde, einer Raumstation oder ähnlichem Anwendung finden.

Aus US 6,347,262 ist ein Verfahren zur treibstoffoptimalen Regelung von Lage und Nutation eines rotierenden Raumfahrzeuges bekannt. Hierbei wird über eine Bestimmung von Drehgeschwindigkeiten und Drehwinkeln ein Fehlersignals ermittelt und entsprechend dem Ergebnis für dieses Fehlersignal ein Drehmoment auf das Raumfahrzeug ausgeübt.

EP 0 977 687 B1 beschreibt unterschiedliche Möglichkeiten zur treibstoffoptimalen, rechnergestützten Ansteuerung von Düsen eines Raumfahrzeuges. Es werden dabei überwiegend Verfahren beschrieben, die einen Simplexalgorithmus beinhalten, wobei andererseits bereits dort ausgeführt wird, dass ein solcher Simplexalgorithmus mit einem hohen Aufwand an Rechenzeit verbunden ist. Das im Rahmen der dortigen Erfindung beschriebene Verfahren benutzt ein Verfahren, das an den Simplexalgorithmus angelehnt ist und von der Bildung eines Simplextableaus ausgeht. Letztlich wird dort ein dualer Simplexalgorithmus zur Bildung eines treibstoffoptimalen Ansteuervektors verwendet. Als Alternativmöglichkeit zur Ermittlung einer treibstoffoptimalen Ansteuerung von Düsen wird in EP 0 977 687 B1 lediglich ein "Table Look-up"-Verfahren beschrieben, bei dem treibstoffoptimale Düsenanordnungen berechnet und in einer Tabelle abgelegt werden und aus diesen vorgespeicherten Ergebnissen für den jeweils aktuellen Ansteuerfall ein aktuelles Ansteuerergebnis durch Kombination von gespeicherten Ergebnissen gebildet wird. Nachteilig ist jedoch, dass mit diesem Verfahren im Allgemeinen nicht eine tatsächlich treibstoffoptimale Lösung gefunden wird.

Aufgabe der vorliegenden Erfindung ist es daher, ein Verfahren zur rechnergestützten Ermittlung einer treibstoffoptimalen Ansteuerung von Düsen bereitzustellen, das mit einem möglichst geringen Rechenaufwand auskommt und trotzdem sicher zu einer treibstoffoptimalen Lösung führt.

Diese Aufgabe wird gelöst durch die Merkmale des Anspruchs 1. Weiterhin umfasst die Erfindung ein Computer-Programm nach Anspruch 5 und ein Computer-Programm-Produkt nach Anspruch 6.

Die vorliegende Erfindung umfasst ein Verfahren zur rechnergestützten Ermittlung einer treibstoffoptimalen Ansteuerung von Düsen gemäß einer Ansteuervorschrift $b = Ax$, wobei

b einen gewünschten m-dimensionalen Kräfte-/Drehmomentvektor,

A eine mxn-dimensionale Düsenmatrix und

x den gesuchten n-dimensionalen Düsenansteuerungsvektor darstellt, mit Hilfe dessen ein entsprechender Schub durch die zugehörigen, angesteuerten Düsen bewirkt wird. Der Düsenansteuervektor soll dabei dem Minimierungskriterium

$$J := \sum_{i=1}^{i=n} x_i \to \min$$

genügen. Dieses Minimierungskriterium ist Ausdruck dafür, dass der Treibstoffverbrauch minimal sein soll, was durch eine Minimierung der Düsenansteuerung und damit durch eine Minimierung des durch die jeweiligen Düsen insgesamt erzeugten Schubes erzielt wird.

Gemäß der Erfindung sind nun im Rahmen dieses Verfahrens folgende Verfahrensschritte vorgesehen:

- rechnergestützt erfolgt eine definierte matrizentechnische Transformation von Ausgangsbedingungen für den Massenfluss der Düsen und des Minimierungskriteriums, wobei die Ausgangsbedingungen und das Minimierungskriterium jeweils einer analogen matrizentechnischen Transformation unterzogen werden,

- rechnergestützt erfolgt eine datenverarbeitungstechnische Darstellung einer geometrischen Beschreibung der matrizentechnisch transformierten Ausgangsbedingungen,

- durch ein rechnergestütztes, geometrisches Suchverfahren im Vektorraum erfolgt eine rechnergestützte Ermittlung von Begrenzungs-Punktmengen der geometrischen Beschreibung der Ausgangsbedingungen, und

- das matrizentechnisch transformierte Minimierungskriterium wird auf die Punkte der Begrenzungs-Punktmengen angewendet.

Es kann also ein Simplexverfahren oder ein vergleichbares iteratives Verfahren im Rahmen der Erfindung vermieden werden. Vielmehr wird statt eines iterativen Lösungsweges ein rechnergestützt realisierter geometrischer Lösungsweg gewählt. Durch die definierte matrizentechnische Transformation ist eine geometrische Beschreibung des Problems möglich, die ein geometrisches Auffinden einer treibstoffoptimalen Lösung erlaubt. Ein solches Verfahren kann viel schneller erfolgen als eine Lösung des Problems über übliche Simplexverfahren.

Insbesondere kann im Rahmen der vorliegenden Erfindung vorgesehen sein, dass

- zur matrizentechnischen Transformation der Ausgangsbedingungen für den Massenfluss der Düsen eine homogene Lösung der Ansteuervorschrift gemäß $x_{ho} = A_0 r$ definiert wird, wobei

$A_0$: *die n x (n-m) dimensionale Nullraummatrix von A und*
*r.* *einen (n-m) dimensionalen Vektor beliebiger reeller Zahlen darstellt,*

- im Rahmen der Anwendung der matrizentechnischen Transformation des Minimierungskriteriums eine rechnergestützte Berechnung von Skalarprodukten einer Vektordarstellung von Punkten der Begrenzungs-Punktmenge und des Vektors

$$v_d{}^T := \left[ \sum_{j=1}^{n} A_{0\,j1} \quad \sum_{j=1}^{n} A_{0\,j2} \quad \cdots \quad \sum_{j=1}^{n} A_{0\,jp} \right], \quad p := n - m$$

erfolgt und

- eine treibstoffoptimale Lösung mit Hilfe desjenigen Vektors r berechnet wird, dessen Skalarprodukt mit dem Vektor $v_d$ minimal ist.

Dies ist ein Beispiel, wie durch die Anwendung einer matrizentechnischen Transformation mit Hilfe der Nullraummatrix $A_0$ sowohl das Minimerungskriterium wie auch die Ausgangsbedingungen geeignet transformiert werden können. Das Minimierungskriterium kann dabei im wesentlichen auf die einfache Bildung von Skalarprodukten von Vektoren, also auf eine einfache geometrische Rechenvorschrift, reduziert werden.
Eine bevorzugte Weiterbildung der vorliegenden Erfindung sieht vor, dass

- die matrizentechnisch transformierten Ausgangsbedingungen für den Massenfluss der Düsen rechnergestützt in zulässige mehrdimensionale Wertebereiche umgerechnet werden,

- zur Ermittlung der Begrenzungs-Punktmengen eine Bildung von mindestens einer mehrdimensionalen Schnittmenge der einzelnen zulässigen mehrdimensionalen Wertebereiche erfolgt und

- die Begrenzungs-Punktmengen als diejenigen Punktmengen ermittelt werden, die die mindestens eine Schnittmenge begrenzen.

Auf diese Weise kann die Anzahl der im Rahmen des erfindungsgemäßen Verfahrens zu betrachtenden Punkte deutlich reduziert werden, da lediglich diejenigen Punkte betrachtet werden, die die mindestens eine Schnittmenge begrenzen. Diese bedeutet eine weitere Verkürzung der für das Verfahren benötigte Rechenzeit und damit einen weiteren Vorteil gegenüber den bisher bekannten Verfahren.
Das vorgenannte Verfahren kann vorteilhaft dadurch noch weiter vereinfacht und damit die erforderliche Rechenzeit weiter reduziert werden, dass

- eine wiederholte Projektion der zulässigen mehrdimensionalen Wertebereiche der Dimension p auf eine Dimension p-1 erfolgt, bis eine Projektion der zulässigen Wertebereiche auf Begrenzungsintervalle einer Dimension p=1 erreicht ist und

- anschließend ein rechnergestütztes Suchverfahren eine rechnergestützte Ermittlung von Begrenzungs-Punktmengen als Schnittmenge von Begrenzungsintervallen durchführt.

Durch die hier vorgesehene wiederholte Projektion von einer Dimension p auf eine Dimension p-1 gelangt man also schrittweise zu immer niedrigeren Dimensionen (p-1, p-2, p-3 usw.), in denen die fraglichen Wertebereiche dargestellt werden, und damit zu rechentechnisch einfacher handhabbaren Problemen, als sie es in der Ausgangsdimension p wären. Grundsätzlich könnte bei Erreichen einer geeigneten, ausreichend reduzierten Dimension $p > p_r > 1$ bereits die Ermittlung der Begrenzungs-Punktmengen erfolgen. Bevorzugt wird jedoch die wiederholte Projektion so lange durchgeführt, bis eine Beschreibung der Dimension p=1 erreicht ist. Hier kann das Problem auf einfachste Weise und mit dem geringsten Aufwand an Rechenzeit gelöst werden.

Ein weiterer Gegenstand der vorliegenden Erfindung ist ein Computer-Programm zur rechnergestützten Ermittlung einer treibstoffoptimalen Ansteuerung von Düsen gemäß einer Ansteuervorschrift $b = Ax$, wobei

b     einen gewünschten m-dimensionalen Kräfte-/Drehmomentvektor,

A     eine mxn-dimensionale Düsenmatrix und

x     den gesuchten n-dimensionalen Düsenansteuerungsvektor darstellt, und

der Düsenansteuervektor dem Minimierungskriterium

$$J := \sum_{i=1}^{i=n} x_i \rightarrow \min$$

genügen soll.

Gemäß der Erfindung ist vorgesehen, dass das Computerprogramm folgendes beinhaltet:

- eine erste Programmroutine zur rechnergestützten Durchführung einer definierten matrizentechnischne Transformation von Ausgangsbedingungen für den Massenfluss der Düsen und des Minimierungskriteriums,

- eine zweite Programmroutine zur rechnergestützten Durchführung einer datenverarbeitungstechnischen Darstellung einer geometrischen Beschreibung der matrizentechnisch transformierten Ausgangsbedingungen,

- eine dritte Programmroutine zur rechnergestützten Durchführung eines geometrischen Suchverfahrens im Vektorraum zur rechnergestützten Ermittlung von Begrenzungs-Punktmengen der geometrischen Beschreibung der Ausgangsbedingungen,

- eine vierte Programmroutine zur rechnergestützten Anwendung des matrizentechnisch transformierten Minimierungskriteriums auf die Punkte der Begrenzungs-Punktmengen.

Ein solches Computer-Programm ist zur Durchführung des vorgenannten erfindungsgemäßen Verfahrens geeignet. Es können auch weitere Programmroutinen im Rahmen dieses Computer-Programms vorgesehen werden, die zur Durchführung einer oder mehrerer der vorgenannten Weiterbildungen des erfindungsgemäßen Verfahrens geeignet sind.

Ein weiterer Gegenstand der vorliegenden Erfindung ist ein Computer-Programm-Produkt, beinhaltend einen maschinenlesbaren Programmträger, auf dem ein vorstehend beschriebenes Computer-Programm in Form von elektronisch auslesbaren Steuersignalen gespeichert ist. Die Steuersignale können in jeder geeigneten Form gespeichert sein, die elektronische Auslesung kann dann entsprechend durch elektrische, magnetische, elektromagnetische, elektrooptische oder sonstige elektronische Verfahren erfolgen. Beispiele für solche Programmträger sind Magnetbänder, Disketten, Festplatten, CD-ROM oder Halbleiterbausteine.

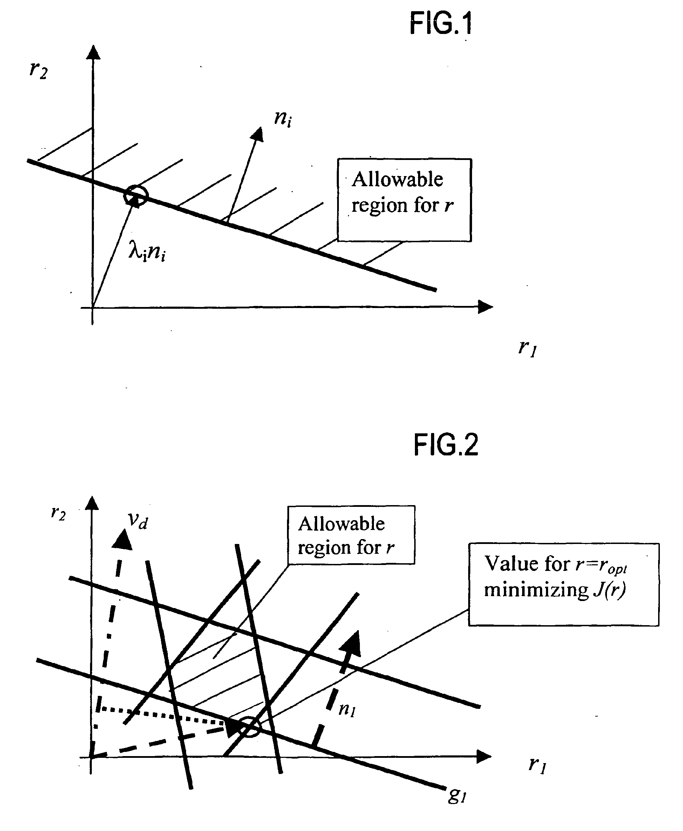

Ein spezielles Ausführungsbeispiel der vorliegenden Erfindung wird nachfolgend anhand der Figuren 1 bis beschrieben.

Es zeigen

Fig. 1:     Zulässiger Bereich für die Vektoren $r$ in einem Raum der Dimension p=2, wobei eine Bedingungsungleichung $n_i^T(r-\lambda_i n_i) \geq 0$ erfüllt ist.

Fig. 2:     Zulässiger Bereich für r im zweidimensionalen Raum unter Beachtung der Ausgangsbedingungen für mehrere Düsen

Fig. 3:     Zulässiger Bereich für r im eindimensionalen Raum unter Beachtung der Ausgangsbedingungen für mehrere Düsen

Fig. 4:     Schnittmenge zweier (p-1)-dimensionaler Ebenen

Fig. 5:     Lineare Koordinatentransformation von Einheitsvektoren

Die Erfindung betrifft das folgende Problem: Es sollen durch Düsen eines Raumfahrzeuges gewünschte Kräfte und/oder Drehmomente auf das Raumfahrzeug ausgeübt werden. Wie müssen die Düsen angesteuert werden, damit die gewünschten Kräfte und/oder Drehmomente mit einer minimalen Menge an Treibstoff für die Düsen erzielt werden können? Zusätzlich muss der Schub der Düsen in einem erlaubten Wertebereich liegen, also zwischen einem minimal möglichen und einem maximal möglichen Wert. Entsprechend müssen daher auch die Ansteuerwerte sich in einem erlaubten Wertebereich bewegen.

Dieses Problem ist ein sogenanntes lineares Optimierungsproblem. Bislang wurden zur Lösung solcher Probleme meist Simplex-Algorithmen verwendet, wie eingangs beschrieben, die aber die ebenfalls eingangs geschilderten Nachteile aufweisen. Die vorliegende Erfindung stellt eine verbesserte Möglichkeit zur Lösung des linearen Optimierungsproblems dar.

Das lineare Optimierungsproblem für eine treibstoffoptimale Düsenansteuerung beruht auf der Gleichung:

$$b = Ax \qquad\qquad (2.1)$$

wobei

b    einen gewünschten m-dimensionalen Kräfte-/Drehmomentvektor,

A    eine mxn-dimensionale Düsenmatrix und

x    den gesuchten n-dimensionalen Düsenansteuerungsvektor darstellt.

Es soll für den gesuchten, unbekannten Vektor x ein Minimierungskriterium erfüllt sein, durch das eine treibstoffoptimale Ansteuerung garantiert wird, nämlich

$$J := \sum_{i=1}^{i=n} x_i \to \min \qquad\qquad (2.2)$$

Weiterhin müssen sich die Werte für den Vektor x in einem zulässigen Wertebereich bewegen analog dem zulässigen Wertebereich für den Schub der Düsen:

$$0 \le x_i \le 1 \; for \; i = 1,..n . \qquad\qquad (2.3)$$

Ohne Beschränkung der Allgemeinheit des Problems dargestellt in (2.1) kann angenommen werden, dass die Anzahl der Düsen n größer ist als die Anzahl m der gewünschten Kräfte und/oder Drehmomente

$$n > m \qquad\qquad (2.4)$$

und dass die Düsenmatrix A vollen Rang hat,

$$rank(A) = m \qquad\qquad (2.5)$$

Ein Verstoß gegen (2.5) würde beispielsweise bedeuten, wenn alle Düsen exakt in die gleiche Richtung weisen würden. Dies wird jedoch stets durch eine sinnvolle Anordnung der Düsen an dem Satelliten vermieden.

Es kann nun das Minimierungskriterium umgeschrieben werden:
Die allgemeine Lösung der Gleichung (2.1) $x_g$ kann wie folgt geschrieben werden

$$x_g = x_{pa} + x_{ho} \qquad\qquad (2.6)$$

wobei

$x_{pa}$    spezielle Lösung von (2.1)
$x_{ho}$    allgemeine Lösung der homogenen Gleichung von (2.1).

Eine spezielle Lösung $x_{pa}$ kann folgendermaßen aus (2.1) generiert werden:

$$b = Ax = AA^T(AA^T)^{-1}Ax = AA^T(AA^T)^{-1}b = A(A^T(AA^T)^{-1}b) = A(x_{pa}) \qquad (2.7)$$

Daraus erhält man die folgende spezielle Lösung:

$$x_{pa} = A^T(AA^T)^{-1}b. \qquad (2.8)$$

Die allgemeine homogene Lösung des Problems bilden alle Vektoren $x_{ho}$ für die gilt:

$$Ax_{ho} = 0, \qquad (2.9)$$

Diese homogene Lösung kann folgendermaßen geschrieben werden:

$$x_{ho} = A_0 r \qquad (2.10)$$

wobei

$A_0$:    $n \times (n-m)$ Nullraummatrix von A
$r$.    $(n-m)$ dimensionaler Vektor beliebiger reeller Zahlen.

Das Minimierungskriterium aus (2.2) kann nun mit Hilfe der Gleichungen (2.6,2.8,2.10) geschrieben werden als

$$J(r) = \sum_{j=1}^{n}(x_{pa})_j + v_d^T r \qquad (2.11)$$

mit

$$v_d^T := \left[ \sum_{j=1}^{n} A_{0\,j1} \quad \sum_{j=1}^{n} A_{0\,j2} \quad \cdots \quad \sum_{j=1}^{n} A_{0\,jp} \right] \qquad (2.12)$$

$$p := n - m. \qquad (2.13)$$

Gleichung (2.11) kann nun folgendermaßen interpretiert werden: Für die erlaubten Werte von r soll derjenige Vektor gefunden werden, dessen Skalarprodukt mit dem Vektor $v_d$ minimal wird. Dies folgt aus der Tatsache, dass die spezielle Lösung wie in Gleichung (2.8) definiert einer weiteren Minimierung nicht mehr zugänglich ist. Die vorliegende Erfindung setzt diese Suche nach dem opimalen Vektor $r$ rechnergestützt mit Hilfe einer entsprechenden Programmroutine eines Computer-Programms um.
Geometrische Beschreibung der treibstoffoptimalen Lösung:
Die zulässigen Werte bzw. der zulässige Bereich für r wird aus den Ausgangsbedingungen für den Massenfluss der Düsen nach (2.3) durch eine matrizentechtnische Transformation gewonnen. Man erhält dies formal durch Einsetzen von (2.6,2.8,2.10) in 2.3)

$$- x_{pa} \leq A_0 r \leq \underline{1} - x_{pa} \qquad\qquad (2.14)$$

wobei

<u>1</u>:    $n$-dimensionaler Vektor, bei dem alle Elemente gleich 1 sind

Es kann nun eine geometrische Beschreibung der so transformierten Ausgangsbedingungen erfolgen, die im Rahmen der vorliegenden Erfindung datenverarbeitungstechnisch realisiert wird. Es kann dabei die Gleichung (2.14) mit den folgenden Definitionen in skalarer Form geschrieben werden.

$$l_i := -x_{pai}$$
$$u_i = 1 - x_{pai} \qquad\qquad (2.15a\text{-}c)$$
$$A_0 = \begin{bmatrix} a_{01}^{\ T} \\ a_{02}^{\ T} \\ \vdots \\ a_{0n}^{\ T} \end{bmatrix}$$

Damit erhält man:

$$a_{0i}^{\ T}\left(r - \frac{l_i}{a_{0i}^{\ T} a_{0i}} a_{0i}\right) \geq 0 \qquad \textit{for i=1,..n} \qquad\qquad (2.16)$$

$$- a_{0i}^{\ T}\left(r - \frac{u_i}{a_{0i}^{\ T} a_{0i}} a_{0i}\right) \geq 0 \qquad \textit{for i=1,..n.} \qquad\qquad (2.17)$$

Dividiert man nun (2.16, 2.17) durch $|a_{0i}|$ - aufgrund der Bedingung (2.5) ist dies immer möglich - und mit den folgenden Definitionen

$$n_i := \frac{a_{0i}}{|a_{0i}|} \qquad \textit{for i=1,...n} \qquad\qquad (2.18)$$

$$n_i := -\frac{a_{0i}}{|a_{0i}|} \qquad \textit{for i=n+1,...2n} \qquad\qquad (2.19)$$

$$\lambda_i := \frac{l_i}{|a_{0i}|} \qquad \textit{for i=1,...n} \qquad\qquad (2.20)$$

$$\lambda_i := \frac{u_i}{|a_{0_i}|} \quad \text{for } i=n+1,\dots 2n \qquad (2.21)$$

können die Gleichungen (2.16, 2.17) wie folgt geschrieben werden:

$$n_i^T (r - \lambda_i n_i) \geq 0 \quad \text{for } i=1,\dots 2n. \qquad (2.22)$$

Damit kann nun für einen bestimmten Wert von i die Gleichung (2.22) als eine ein- oder mehrdimensionale Ebene interpretiert und damit entsprechend datenverarbeitungstechnisch dargestellt werden (siehe Fig. 1), wobei diese Ebene um den Vektor $\lambda n_i$, bezüglich des Ursprungs verschoben ist und senkrecht zum Normalenvektor $n_i$ orientiert ist. Im Fall der Fig. 1 ist diese ein- oder mehrdimensionale Ebene aus Gründen der Einfachheit als Gerade dargestellt, also als eine Ebene der Dimension 1. Diese eindimensionale Ebene begrenzt den Bereich der zulässigen Werte bzw. der zulässigen Vektoren für $r$. Wenn das Vorzeichen von $\lambda_i$ negativ ist, ist auch der Nullvektor in der erlaubten Region für $r$ enthalten, ist jedoch das Vorzeichen von $\lambda_i$ positiv, dann ist der Nullvektor aus der erlaubten Region ausgeschlossen. Der Normalenvektor $n_i$ zeigt in Richtung der erlaubten Region. Die geometrische Beschreibung der Gleichung (2.22) ist für p=2 in Fig. 1 für $\lambda_i>0$ dargestellt. Es wird darauf hingewiesen, dass zu jeder Bedingung $i$ in (2.22) eine Gegenbedingung $i+n$ mit $n_{i+n}=-n_i$ existiert (entsprechend den Ausgangsbedingungen für den minmalen und maximalen Massenfluss einer individuellen Düse), woraus n Paare von Bedingungen entstehen die zulässige "Gebietsstreifen" definieren, wie in Fig. 2 dargestellt.

Die gemeinsame Schnittmenge aller zulässigen Bereiche bestimmt denjenigen Bereich im p-dimensionalen Raum, in dem $r$ alle 2n transformierten Ausgangsbedingungen bzw. alle Bedingungen aus (2.22) erfüllt. In Fig. 2 ist dies für n=3 Düsen, also für 6 Bedingungen, dargestellt. Wenn die Schnittmenge aus allen zulässigen Bereichen gebildet wird, ergibt sich ein konvexer Bereich als Schnittmenge, d.h. dass für jeweils zwei Punkte, die innerhalb der Schnittmenge liegen, auch alle Punkte auf einer geraden Linie zwischen diesen beiden Punkten innerhalb der Schnittmenge liegen.

Aber nicht nur der Bereich der zulässigen Werte für $r$ kann geometrisch beschrieben werden, sondern auch der optimale Wert für $r$, $r_{opt}$, welcher $J$ in Gleichung (2.11) minimiert: $J$ wird, wie gesagt, minimal für denjenigen Vektor $r$ der das kleinste Skalarprodukt mit oder die kleinste Projektion auf den Vektor $v_d$ aufweist. In Fig. 2 ist dies für den Vektor $r$ gegeben, der zu dem mit einem Kreis markierten Eckpunkt, welcher auf der Geraden $g_1$ liegt, zu der der Normalenvektor $n_1$ gehört. Der optimale Punkt ergibt sich also als einer der Eckpunkte der Begrenzungslinien der Schnittmenge. Die Begrenzungslinien bilden also Begrenzungs-Punktmengen.

Die geometrische Beschreibung dieses zweidimensionalen Beispiels kann in analoger Weise unmittelbar auf höhere Dimensionen p angewendet werden.

Wenn das Problem ein dreidimensionales Problem ist, dann können die n transformierten Ausgangsbedinungen als n Gebietsbereiche zwischen n Ebenenpaare beschrieben werden, wobei jedes Ebenenpaar aus zwei zueinander parallelen Ebenen besteht und der dazwischenliegende Gebietsbereich den Bereich für r darstellt, der die zugehörigen transformierten Ausgangsbedingungen erfüllt. Der insgesamt zulässige Bereich für r, der alle transformierten Ausgangsbedingungen erfüllt, ergibt sich als Schnittmenge aller n Gebietsbereiche und entspricht damit einem dreidimensionalen Polygon. Der optimale Punkt ergibt sich auch hier als einer der Eckpunkte der Begrenzung des Polygons, welches nun durch Begrenzungsflächen als Begrenzungs-Punktmengen begrenzt wird. Der optimale Punkt ist wiederum derjenige Eckpunkt, dessen Vektor r mit dem Vektor $v_d$ das kleinste Skalarprodukt aufweist.

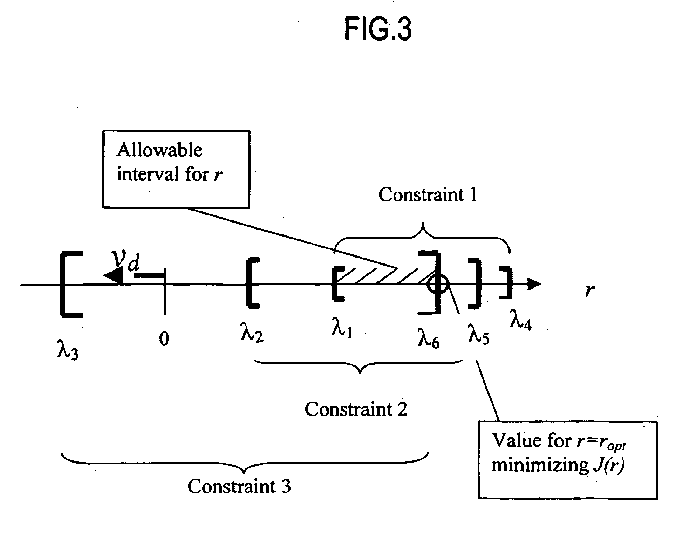

Wenn es sich um ein eindimensionales Problem handelt, dann können die Bereiche, die durch die n transformierten Ausgangsbedingungen begrenzt werden, als eindimensionale Intervalle beschrieben werden. Die n transformierten Ausgangsbedingungen werden dann durch Begrenzungspunkte beschrieben. Dies ist beispielhaft in Fig. 3 dargestellt. Die in Fig. 3 dargestellten Klammern gleicher Größe bilden jeweils ein Paar von transformierten Ausgangsbedingungen. Die unteren Grenzen der Ausgangsbedingungen sind mit $\lambda_1,\dots \lambda_3$, bezeichnet, die oberen Grenzen der Ausgangsbedingungen mit $\lambda_4,\dots \lambda_6$ (Gleichungen 2.20, 2.21). Im Beispiel der Fig. 3 existiert ein Schnittmengen-Intervall als zulässiger Bereich für r, das gleichzeitig alle transformierten Ausgangsbedingungen erfüllt. Der optimale Wert für r ergibt sich wiederum aus einem Punkt aus der Begrenzungs-Punktmenge, hier als der rechte Begrenzungspunkt des Schnittmengen-Intervalls. Der zu diesem Punkt gehörende Vektor $r$ hat wiederum das kleinste Skalarprodukt mit dem ebenfalls in Fig. 3 dargestellten, negativen Vektor $v_d$.

Die gleichen Interpretationen und Beschreibungen sind auf Dimensionen p>3 anwendbar.

Rechnergestützte Ermittlung einer treibstoffoptimalen Lösung:
Es soll nun ein spezielles Beispiel zur Ermittlung einer treibstoffoptimalen Lösung dargestellt werden. Es wird dabei ein Verfahren wie im Rahmen der Erfindung beschrieben durchgeführt, d. h. es erfolgt insbesondere rechnergestützt eine Ermittlung von (p-1)-dimensionalen Begrenzungs-Punktmengen als geometrische Beschreibung der transformierten Ausgangsbedingungen in Form von Ebenen. Dieses spezielle Beispiel beschreibt nun eine bevorzugte Weiterbildung der Erfindung und beinhaltet insbesondere die folgenden Verfahrensschritte:

1. Rechnergestützte Bestimmung einer ersten der ermittelten Ebenen als Begrenzungs-Punktmenge, die wahrscheinlich die treibstoffoptimale Lösung beinhaltet. Weitere Detail zum Auffinden dieser Ebene siehe weiter unten.

2. Rechnergestützte Anwendung einer linearen Koordinatentransformation auf alle Vektoren $r$ so dass der Normalenvektor der ersten Ebene anschließend parallel zu dem p-ten Einheitsvektor derjenigen Einheitsvektoren ist, die den Vektorraum der Vektoren r aufspannen, und so dass der Normalenvektor in die gleiche Richtung weist wie dieser Einheitsvektor.

3. Rechnergestützte Berechnung von Schnittmengen in Form von Schnittebenen der übrigen ermittelten Ebenen mit der ersten Ebene. Die p-te Komponente jeder Schnittebene hat dabei denselben konstanten Wert wie die p-te Komponente der ersten Ebene nach der linearen Koordinatentransformation. Damit kann die eindeutige geometrische Beschreibung der Schnittebenen vereinfacht werden auf eine Dimension $p_{new}= p-1$. Damit sind zur Beschreibung eines Vectors $v_d$ nur noch die ersten $p-1$ Komponenten erforderlich.

4. Rechnergestützte Prüfung: ist $p_{new}$ verschieden von 1? Dann werden die Schritte 1-3 erneut durchgeführt. Rechnergestützte Prüfung: ist $p_{new}$=1 dann erfolgt eine rechnergestützte Prüfung, ob ein Intervall als Schnittmenge vorliegt, das einen zulässigen Bereich für r darstellt. Wenn kein solches Intervall vorliegt, wird das Verfahren beendet, gemäß Schritt 1 eine zweite Ebene ausgewählt und das Verfahren erneut durchgeführt. Liegt ein solches Intervall vor, so erfolgt eine rechnergestütze Multiplikation der Begrenzungspunkte des Intervalls mit dem mittlerweile zu einem Vektor der Dimension 1, also zu einem Skalar reduzierten Vektor $v_d$. Es wird der kleinere Wert der Ergebnisse der Multiplikation abgespeichert, und falls zuvor bereits das Verfahren für eine oder mehrere andere Ebenen durchgeführt wurde, mit zuvor gespeicherten Werten verglichen. Wenn der zuletzt gespeicherte Wert kleiner ist als ein zuvor gespeicherter Wert, dann wird das Verfahren erneut gemäß Schritt 1 mit einer neuen Ebene begonnen und entsprechend durchgeführt. Wenn der zuletzt gespeicherte Wert nicht kleiner ist, dann repräsentiert der zuvor gespeicherte Wert die optimale Lösung.

Es sollen nun die einzelnen rechnergestützten Schritte detaillierter betrachtet werden.
Bestimmung der ersten der ermittelten Ebenen nach Schritt 1:
Grundsätzlich kann die Ebene, die die treibstoffoptimale Lösung beinhaltet, nicht a priori eindeutig ermittelt werden. Am Beispiel des Falles p=2 kann jedoch verdeutlicht werden, dass bestimmte grundsätzliche Aussagen über die gesuchte (p-1)-dimensionale Ebene bzw. Gerade (im Fall p=2 besitzt also die gesuchte Ebene die Dimension 1) möglich sind. Aus geometrischen Überlegungen wird klar, dass die treibstoffoptimale Lösung immer auf einem der Geradenabschnitte liegt, welche die Schnittmenge aller zulässigen Bereiche begrenzen, und zwar auf derjenigen Geraden, deren Normalenvektor (der in Richtung des zulässigen Bereiches weist) das größte Skalarprodukt mit dem Vektor $v_d$ besitzt und dessen Richtung damit am besten der Richtung des Vektor $v_d$ entspricht. In Fig. 2 entspricht der Normalenvektor $n_1$ am besten dem Vektor $v_d$ so dass der Vektor $v_d$ mit diesem Normalenvektor das größte Skalarprodukt aufweist. Dieses Skalarprodukt kann rechnergestützt berechnet werden und der entsprechende Normalenvektor und damit die zugehörige (p-1)-dimensionale Ebene rechnergestützt bestimmt werden. Bei diesem Verfahren wird in Bezug auf Fig. 2 also davon ausgegangen, dass die treibstoffoptimale Lösung auf dem Geradenabschnitt liegt, der die Schnittmenge begrenzt und durch den Normalenvektor $n_1$ charaktierisiert wird. Analog wird in allen Anwendungsfällen dieses Verfahrens vorgegangen.
Es werden also insbesondere die folgenden Verfahrensschritte durchgeführt:

- Bestimmung desjenigen Normalenvektors, dessen Skalarprodukt mit dem Vektor $v_d$ maximal ist.
  Ermittlung, ob die zugehörige Gerade (oder allgemein: (p-1)-dimensionale Ebene) eine Begrenzungs-Punktmenge der Schnittmenge darstellt (s. unten). Falls nein, so wird diese Gerade verworfen und diejenige Gerade herangezogen, deren Normalenvektor das zweitgrößte Skalarprodukt mit dem Vektor $v_d$ aufweist. Dann wird mit dieser Gerade erneut geprüft, ob sie eine Begrenzungs-Punktmenge darstellt.

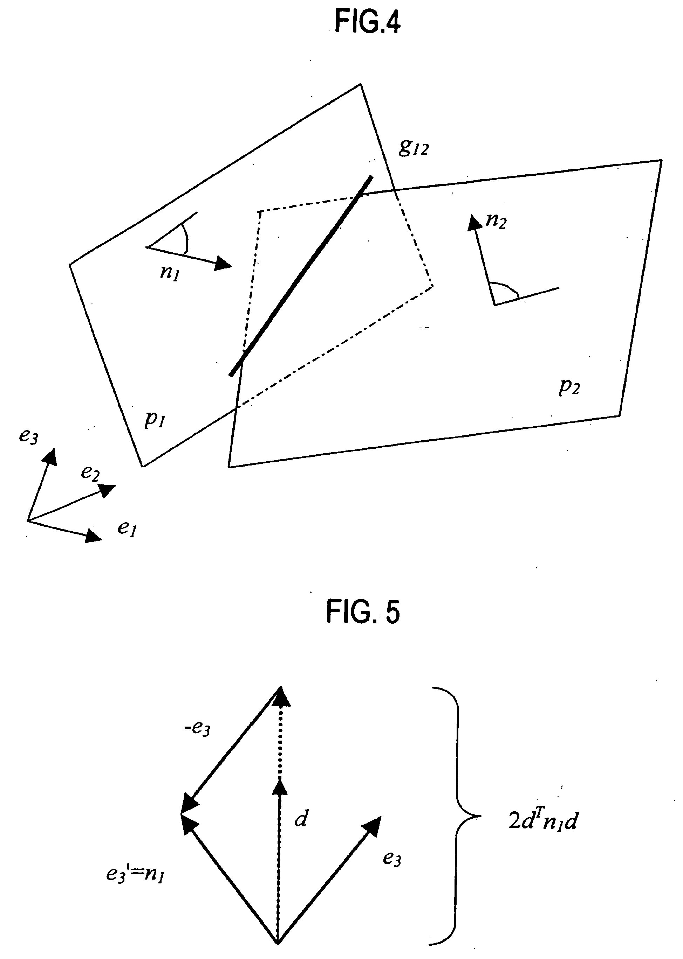

Koordinatentransformation der ersten Ebene:
Um die rechnergestützte Ermittlung der Schnittebenen zu vereinfachen, welche sich als Schnittmenge der einzelnen (p-1)-dimensionalen Ebenen ergibt, wird ein neues Koordinatensystem eingeführt. Dies ist in Fig. 4 dargestellt. Das Koordinatensystem wird durch eine lineare Koordinatentransformation so gedreht, dass ein Einheitsvektor (es wird hier derjenige Einheitsvektor mit dem höchsten Index, also mit Index p gewählt) mit dem Normalenvektor derjenigen Ebene zusammenfällt, die im vorstehend beschriebenen Schritt als erste Ebene ausgewählt wurde. Als Vorteil ergibt sich durch diese Koordinatentransformation, dass die p-te Koordinate aller Schnittebenen nun den gleichen konstanten Wert aufweisen. In Fig. 4 sind zwei Ebenen $p_1$ und $p_2$ dargestellt, die im Fall der Fig. 4 eine Schnittebene $g_{12}$ der Dimension 1, also eine Gerade als Schnittmenge aufweisen. Es sei nun $P_1$ die nach dem vorstehend beschriebenen Verfahren ausgewählte erste Ebene. Dann wird durch eine Koordinatentransformation der Einheitsvektor $e_3$ um 180° um den Vector $e_3 + n_1$ gedreht, um einen transformierten Einheitsvektor $e_3'$ zu erhalten, der nun mit dem Vektor $n_1$ zusammenfällt (siehe Fig. 5). Die dritte Koordinate von $g_{12}$ wird dann eine Konstante. Diese Koordinatentransformation kann ausgedrückt werden als:

$$e_3^{\;\cdot} = n_1 = \left[2dd^T - E\right]e_3 \qquad (2.23)$$

mit

$$d := \frac{e_3 + n_1}{\left|e_3 + n_1\right|}. \qquad (2.24)$$

Die Transformationsgleichung (2.23) kann von drei Dimensionen auf ein $p$-dimensionales Problem verallgemeinert werden mit:

$$e_p^{\;\cdot} = n_i = \left[2dd^T - E\right]e_p \qquad (2.25)$$

mit

$$d := \frac{e_p + n_i}{\left|e_p + n_i\right|}. \qquad (2.26)$$

wobei $i$ der Index der gewählten Ebene ist.

Bestimmung der Schnittebenen / Schnittmengen:

Es können Gleichungen zur Beschreibung der Schnittmengen in Form von Ebenengleichungen ermittelt werden. Die Ebenengleichung für jede Ebene $i$ im $p$-dimensionalen Raum kann geschrieben werden als:

$$\left[n_{i1}\; n_{i2}\; n_{i3}...n_{i\,p-1}\; n_{ip}\right]\begin{bmatrix} r_1 \\ r_2 \\ r_3 \\ r_{p-1} \\ r_p \end{bmatrix} - \lambda_i = 0 \qquad (2.27)$$

Die Schnittmenge dieser Ebene mit einer gewählten Ebene $j$ wird beschrieben durch die Gleichung:

$$r_p = \lambda_j \qquad (2.28)$$

Damit erhält man als Beschreibung der Schnittmenge in Form einer Schnittebene:

$$\begin{bmatrix} n_{i1} & n_{i2} & n_{i3} \dots n_{i\,p-1} \end{bmatrix} \begin{bmatrix} r_1 \\ r_2 \\ r_3 \\ r_{p-1} \end{bmatrix} + n_{ip}\lambda_j - \lambda_i = 0 . \qquad (2.29)$$

Gleichung (2.29) kann in Form der Gleichung (2.27) umgeschrieben werden zu

$$\overline{n}_i^{\,T}\,\overline{r} - \overline{\lambda}_i = 0 . \qquad (2.30)$$

mit

$$\overline{n}_i := \begin{bmatrix} n_{i1} \\ n_{i2} \\ n_{i3} \\ n_{i\,p-1} \end{bmatrix} * \frac{1}{\sqrt{1 - n_{ip}^{\;2}}} \qquad (2.31)$$

$$\overline{r} := \begin{bmatrix} r_1 \\ r_2 \\ r_3 \\ r_{p-1} \end{bmatrix} \qquad (2.32)$$

$$\overline{\lambda}_i := \frac{\lambda_i - n_{ip}\lambda_j}{\sqrt{1 - n_{ip}^{\;2}}} \qquad (2.33)$$

Rechnergestütztes Suchverfahren:
Das rechnergestützte Suchverfahren kann nun grundsätzlich folgende Schritte beinhalten:

1. Rechnergestützte Ermittlung der erfolgversprechendsten ersten Ebene als Startebene, welcher die treibstoffoptimale Lösung am wahrscheinlichsten beinhaltet und Speicherung des Vektors, der vom Koordinatenursprung zu dieser Ebene weist.

2. Rechnergestützte Durchführung einer Koordinatentransformation wie oben beschrieben und rechnergestützte Ermittlung von Schnittebenen, wie ebenfalls oben beschrieben.

3. Mit den ermittelten Schnittebenen werden dann die vorstehend beschriebenen Verfahrensschritte durchgeführt, bis die Dimension auf $p=1$ reduziert ist.

4. Es wird dann ermittelt, ob ein zulässiges Intervall vorliegt (siehe oben). Ist dies gegeben, wird entsprechend der obigen Beschreibung ein Punkt als Beschreibung einer treibstoffoptimalen Lösung ermitttelt und durch eine entsprechende Rücktransformation der Koordinaten die treibstoffoptimale Lösung rechnergestützt berechnet.

5. Wiederholung der Schritte 1 bis 4, bis keine weitere Verbesserung mehr erzielt wird. Die dann vorliegende Lösung stellt die globale treibstoffoptimale Lösung dar.

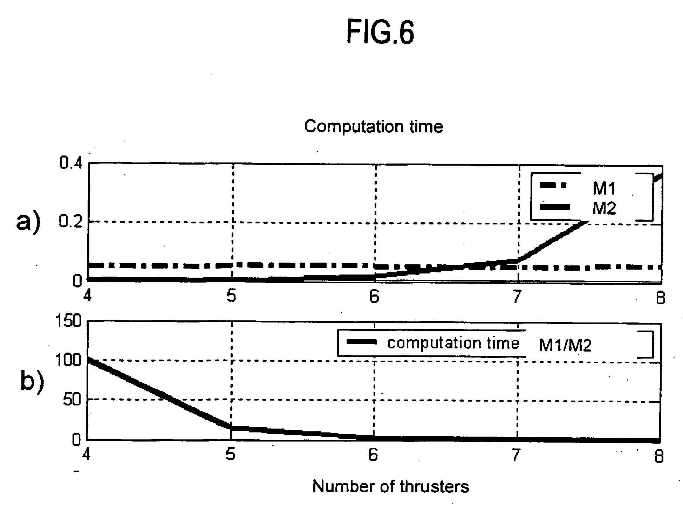

Fig. 6 zeigt im Rahmen eines Berechnungsbeispiels einen Vergleich zwischen der Rechenzeit eines üblichen Verfahrens M1 nach einem Simplex-Algorithmus mit dem erfindungsgemäßen Verfahren M2, jeweils für Anordnungen mit 4, 5, 6, 7 oder 8 Düsen. Wie bereits aus Fig. 6 a) deutlich wird, liegt in diesem Beispiel die Rechenzeit für das erfindungsgemäße Verfahren M2 für die Fälle mit 4, 5 und 6 Düsen deutlich unter der Rechenzeit des Simplex-Verfahrens M1. Die Fig. 6 b) veranschaulicht das Verhältnis Rechenzeit M1 / Rechenzeit M2. Für 4 Düsen ist die Rechenzeit von M1 um einen Faktor 100, für 5 Düsen um einen Faktor 16 und für 6 Düsen um einen Faktor 3 langsamer als das erfindungsgemäße Verfahren. Erst für höhere Düsenzahlen wird in diesem Beispiel das erfindungsgemäße Verfahren M2 langsamer als das Simplex-Verfahren.

Soll die optimale Lösung im eindimensionalen Raum ermittelt werden (d.h. ist die Differenz zwischen der Zahl der Düsen und der Zahl der Bedingungen gleich 1) so kann die oben ausgeführte Darstellung des Verfahrens in eine kompaktere Form gebracht werden. Dann ergibt sich Gleichung (2.14) als n Gleichungen für die Obergrenze und Untergrenze, also den zulässigen Bereich der transformierten Ausgangsbedingungen

$$-x_{pa} \leq a_0 r \leq 1 - x_{pa} \qquad (2.23)$$

mit dem $n$-dimensionalen Nullraumvektor $a_0$ und dem unbekannten Skalar $r$.

Wenn eine Komponente $a_{0i}$ gleich Null ist, dann muss für die spezielle Lösung $0 <= x_{pai} <= 1$ gelten, ansonsten kann die o.g. Bedingung nicht erfüllt werden. Dieser Fall ist jedoch hier ausgeschlossen, da dieser Fall in der Praxis eine schlecht gewählte Düsenanordnung bedeuten würde.

Die Gleichungen (2.23) werden durch die Komponenten $a_{0i}$ (unter Beachtung des Vorzeichens von $a_{0i}$) dividiert, und es ergibt sich

$$r_{\min} \leq r \leq r_{\max} \qquad (2.24)$$

mit

$$r_{\min i} := \begin{cases} -\dfrac{x_{pai}}{a_{oi}} & \text{for } a_{0i} > 0 \\[2mm] \dfrac{1 - x_{pai}}{a_{oi}} & \text{for } a_{0i} < 0 \end{cases} \qquad (2.25)$$

$$r_{\max i} := \begin{cases} \dfrac{1 - x_{pai}}{a_{oi}} & \text{for } a_{0i} > 0 \\[2mm] -\dfrac{x_{pai}}{a_{oi}} & \text{for } a_{0i} < 0 \end{cases} \qquad (2.26)$$

Die Bedingungen in (2.24) können nur dann gleichzeitig erfüllt werden, wenn

$$\max(r_{\min}) \leq \min(r_{\max}) \qquad (2.27)$$

Die optimale Lösung für $r$, $r_{opt}$, hängt von dem Vorzeichen des Skalars $v_d$ in dem Minimierungskriterium (2.11) ab: Für $v_d$ größer Null, dann ist das Minimierungskriterium so klein als möglich, wenn r am linken Rand des Intervalls (2.27) gewählt wird,

$$r_{opt} = \max(r_{\min}) \; \text{für } v_d > 0 \qquad\qquad (2.28)$$

und andererseits gilt für $v_d$ kleiner Null, dass das Minimierungskriterium so klein als möglich, wenn r am rechten Rand des Intervalls (2.27) gewählt wird,

$$r_{opt} = \min(r_{\max}) \; \text{für } v_d < 0 \qquad\qquad (2.29)$$

Für $v_d=0$ kann jeder beliebige Wert für r aus dem Interval (2.27) gewählt werden, um das Minimierungskriterium zu erfüllen.

Die Werte für $a_0$ und $v_d$ hängen nur von der Position und der Schubrichtung der Düsen ab, aber nicht von den aktuellen Schubanforderungen. Daher muss die Fallunterscheidung gemäß (2.25, 2.26, 2.28, 2.29) nur ein einziges Mal vor der rechnergestützten Durchführung des Verfahrens zur Ermittlung der optimalen Lösung erfolgen.

**Patentansprüche**

1.  Verfahren zur rechnergestützten Ermittlung einer treibstoffoptimalen Ansteuerung von Düsen gemäß einer Ansteuervorschrift b = Ax, wobei
    b einen gewünschten m-dimensionalen Kräfte-/Drehmomentvektor,
    A eine mxn-dimensionale Düsenmatrix und
    x den gesuchten n-dimensionalen Düsenansteuerungsvektor darstellt, und der Düsenansteuervektor dem Minimierungskriterium

$$J := \sum_{i=1}^{i=n} x_i \to \min$$

genügen soll,
**dadurch gekennzeichnet, dass**

  - rechnergestützt eine definierte matrizentechnische Transformation von Ausgangsbedingungen für den Massenfluss der Düsen und des Minimierungskriteriums erfolgt,
  - rechnergestützt eine datenverarbeitungstechnische Darstellung einer geometrischen Beschreibung der matrizentechnisch transformierten Ausgangsbedingungen erfolgt,
  - durch ein rechnergestütztes, geometrisches Suchverfahren im Vektorraum eine rechnergestützte Ermittlung von Begrenzungs-Punktmengen der geometrischen Beschreibung der Ausgangsbedingungen erfolgt, und
  - das matrizentechnisch transformierte Minimierungskriterium auf die Punkte der Begrenzungs-Punktmengen angewendet wird.

2.  Verfahren nach Anspruch 1,
    **dadurch gekennzeichnet, dass**

  - zur matrizentechnischen Transformation der Ausgangsbedingungen für den Massenfluss der Düsen eine homogene Lösung der Ansteuervorschrift gemäß $x_{ho} = A_0 r$ definiert wird, wobei

    $A_0$: die n x (n-m) dimensionale Nullraummatrix von A und
    $r$: einen (n-m) dimensionalen Vektor beliebiger reeller Zahlen darstellt,

  - im Rahmen der Anwendung der matrizentechnischen Transformation des Minimierungskriteriums eine rechnergestützte Berechnung von Skalarprodukten einer Vektordarstellung von Punkten der Begrenzungs-Punktmenge und des Vektors

$$v_d{}^T := \left[ \sum_{j=1}^{n} A_{0\,j1} \quad \sum_{j=1}^{n} A_{0\,j2} \quad \dots \quad \sum_{j=1}^{n} A_{0\,jp} \right], \quad p := n - m$$

erfolgt und
- eine treibstoffoptimale Lösung mit Hilfe desjenigen Vektors r berechnet wird, dessen Skalarprodukt mit dem Vektor $v_d$ minimal ist.

3. Verfahren nach einem der Ansprüche 1 oder 2,
   **dadurch gekennzeichnet, dass**

   - die matrizentechnisch transformierten Ausgangsbedingungen für den Massenfluss der Düsen rechnergestützt in zulässige mehrdimensionale Wertebereiche umgerechnet werden,
   - zur Ermittlung der Begrenzungs-Punktmengen eine Bildung von mindestens einer mehrdimensionalen Schnittmenge der einzelnen zulässigen mehrdimensionalen Wertebereiche erfolgt und
   - die Begrenzungs-Punktmengen als diejenigen Punktmengen ermittelt werden, die die mindestens eine Schnittmenge begrenzen.

4. Verfahren nach Anspruch 3,
   **dadurch gekennzeichnet, dass**

   - eine wiederholte Projektion der zulässigen mehrdimensionalen Wertebereiche der Dimension p auf eine Dimension p-1 erfolgt, bis eine Projektion der zulässigen Wertebereiche auf Begrenzungsintervalle einer Dimension p=1 erreicht ist und
   - anschließend ein rechnergestütztes Suchverfahren eine rechnergestützte Ermittlung von Begrenzungs-Punktmengen als Schnittmenge von Begrenzungsintervallen durchführt.

5. Computer-Programm zur rechnergestützten Ermittlung einer treibstoffoptimalen Ansteuerung von Düsen gemäß einer Ansteuervorschrift $b = Ax$, wobei

   b einen gewünschten m-dimensionalen Kräfte-/Drehmomentvektor,
   A eine mxn-dimensionale Düsenmatrix und
   x den gesuchten n-dimensionalen Düsenansteuerungsvektor darstellt, und der Düsenansteuervektor dem Minimierungskriterium

$$J := \sum_{i=1}^{i=n} x_i \to \min$$

genügen soll,
**dadurch gekennzeichnet, dass** das Computerprogramm beinhaltet

   - eine erste Programmroutine zur rechnergestützten Durchführung einer definierten matrizentechnischne Transformation von Ausgangsbedingungen für den Massenfluss der Düsen und des Minimierungskriteriums,
   - eine zweite Programmroutine zur rechnergestützten Durchführung einer datenverarbeitungstechnischen Darstellung einer geometrischen Beschreibung der matrizentechnisch transformierten Ausgangsbedingungen,
   - eine dritte Programmroutine zur rechnergestützten Durchführung eines geometrischen Suchverfahrens im Vektorraum zur rechnergestützten Ermittlung von Begrenzungs-Punktmengen der geometrischen Beschreibung der Ausgangsbedingungen,
   - eine vierte Programmroutine zur rechnergestützten Anwendung des matrizentechnisch transformierten Minimierungskriteriums auf die Punkte der Begrenzungs-Punktmengen.

6. Computer-Programm-Produkt beinhaltend einen maschinenlesbaren Programmträger, auf dem ein Computer-Programm nach Anspruch 5 in Form von elektronisch auslesbaren Steuersignalen gespeichert ist.

**Claims**

1. A method for computer-assisted determination of a fuel-optimal control of thrusters according to a control rule $b = Ax$, where

   b represents a desired m-dimensional force/torque vector,
   A represents an mxn dimensional thruster matrix and
   x represents the desired n-dimensional thruster control vector, and
   the thruster control vector is intended to satisfy the minimisation criterion

$$J := \sum_{i=1}^{i=n} x_i \rightarrow \min$$

   **characterised in that**

   - a defined matrix-technique transformation of initial conditions for the mass flow of the thrusters and of the minimisation criterion is performed with computer assistance,
   - a data-processing representation of a geometrical description of the matrix-transformed initial conditions is performed with computer assistance,
   - a computer-assisted determination of boundary point sets of the geometrical description of the initial conditions is performed by a computer-assisted geometrical search method in vector space, and
   - the matrix-transformed minimisation criterion is applied to the points of the boundary point sets.

2. A method according to Claim 1,
   **characterised in that**

   - the matrix-technique transformation of the initial conditions for the mass flow of the thrusters is defined by a homogeneous solution of the control rule according to $x_{ho} = A_0 r$, where
   $A_0$: represents the $n \times (n-m)$ dimensional null space matrix of A and
   r: represents an (n-m) dimensional vector of arbitrary real numbers,
   - a computer-assisted calculation of scalar products of a vector representation of points of the boundary point sets and of the vector

$$v_d{}^T := \left[ \sum_{j=1}^{n} A_{0j1} \quad \sum_{j=1}^{n} A2 \quad \ldots \quad \sum_{j=1}^{n} A_{0jp} \right], \quad p := n - m$$

   is performed in the scope of applying the matrix-technique transformation of the minimisation criterion, and
   - a fuel-optimal solution is calculated with the aid of that vector r whose scalar product with the vector $v_d$ is minimal.

3. A method according to Claim 1 or 2,
   **characterised in that**

   - the matrix-transformed initial conditions for the mass flow of the thrusters is converted with computer assistance into allowable multidimensional value regions,
   - the formation of at least one multidimensional intersection set of the individual allowable multidimensional value regions is performed in order to determine the boundary point sets, and
   - the boundary point sets are determined as those point sets which bound the at least one intersection set.

4. A method according to Claim 3,
   **characterised in that**

   - a repeated projection of the allowable multidimensional value regions of dimension p onto a dimension p-1 is performed until a projection of the allowable value regions onto bounding intervals of a dimension p=1 is reached, and
   - subsequently a computer-assisted search method a computer-assisted determination of boundary point sets as an intersection set of bounding intervals is carried out.

5. A computer program for computer-assisted determination of a fuel-optimal control of thrusters according to a control rule *b = Ax,* where
b represents a desired m-dimensional force/torque vector,
A represents an m×n dimensional thruster matrix and
x represents the desired n-dimensional thruster control vector, and
the thruster control vector is intended to satisfy the minimisation criterion

$$J := \sum_{i=1}^{i=n} x_i \rightarrow \min$$

**characterised in that** the computer program contains

- a first program routine for the computer-assisted conduct of a defined matrix-technique transformation of initial conditions for the mass flow of the thrusters and of the minimisation criterion,
- a second program routine for the computer-assisted conduct of a data-processing representation of a geometrical description of the matrix-transformed initial conditions,
- a third program routine for the computer-assisted conduct of a computer-assisted determination of boundary point sets of the geometrical description of the initial conditions,
- a fourth program routine for the computer-assisted application of the matrix-transformed minimisation criterion to the points of the boundary point sets.

6. A computer program product containing a machine-readable program medium, on which a computer program according to Claim 5 is stored in the form of electronically readable control signals.

**Revendications**

1. Procédé de détermination assistée par ordinateur d'un contrôle optimal en propergol des injecteurs selon une directive de contrôle b = Ax,
b étant un vecteur forces/couple de rotation souhaité de dimension m
A étant une matrice d'injecteur de dimension mxn, et
x étant le vecteur de commande d'injecteur recherché de dimension n et le vecteur de commande d'injecteur devant satisfaire au critère de minimisation,

$$J := \sum_{i=1}^{i=n} x_i \rightarrow \min$$

**caractérisé par**

- une transformation assistée par ordinateur des conditions initiales définie suivant la technique de matrice pour le flux de masse des injecteurs et du critère de minimisation,
- une représentation assistée par ordinateur suivant la technique de traitement des données, d'une description géométrique des conditions initiales transformées suivant la technique de matrice
- un calcul assisté par ordinateur des ensembles de points de délimitation de la description géométrique des conditions initiales à l'aide d'un procédé de recherche géométrique assisté par ordinateur dans l'espace vectoriel et
- critère l'application du minimisation transformé suivant la technique de matrice sur les points des ensembles de points de délimitation.

2. Procédé selon la revendication 1,
**caractérisé en ce que**
pour la transformation des conditions initiales selon la technique de matrice pour le flux de masse des injecteurs, on définit une solution homogène de la directive de commande suivant

$$x_{ho} = A_o r$$

$A_o$ représentant la matrice de l'espace zéro de dimension n x (n-m) de A, et
r représentant un vecteur de dimension (n-m) de n'importe quels nombres réels,

    - un calcul assisté par ordinateur des produits scalaires d'une représentation vectorielle des points de l'ensemble de points de délimitation et du vecteur ayant lieu dans le cadre de l'application de la transformation de la technique de matrice du critère de minimisation.

$$v_d^T := \left[ \sum_{j=1}^{n} A_{oj1} \quad \sum_{j=1}^{n} A_{oj2} \dots \sum_{j=1}^{n} A_{ojp} \right], p := n - m$$

    - une solution optimale en propergol étant calculée à l'aide du vecteur r correspondant dont le produit scalaire est minimum avec le vecteur $v_d$.

**3.** Procédé selon l'une des revendications 1 ou 2,
**caractérisé en ce que**

    - les conditions initiales transformées selon la technique de matrice pour le flux de masse des injecteurs sont converties de manière assistée par ordinateur en zones de valeurs pluridimensionnelles autorisées,
    - au moins une intersection pluridimensionnelle d'ensemble des différentes plages de valeurs pluridimensionnelles autorisées est formée pour calculer les ensembles de points de délimitation, et
    - les ensembles de points de délimitation sont calculés en tant qu'ensembles de points qui limitent au moins une intersection d'ensemble.

**4.** Procédé selon la revendication 3,
**caractérisé en ce qu'**

    - une projection répétée des plages de valeurs pluridimensionnelles autorisées de la dimension p a lieu sur une dimension p-1 jusqu'à ce qu'une projection des plages de valeurs autorisées soit atteinte sur un intervalle de délimitation d'une dimension p=1 et
    - finalement un procédé de recherche assisté par ordinateur effectue un calcul assisté par ordinateur des ensembles de points de délimitation en tant qu'intersection d'ensemble des intervalles de délimitation.

**5.** Programme informatique pour le calcul assisté par ordinateur d'un contrôle optimal en propergol des injecteurs selon la directive de contrôle

$$b = Ax,$$

b étant un vecteur de forces / de couple de rotation souhaité de dimension m,
A une matrice d'injecteur de dimension mxn, et
x le vecteur de contrôle d'injecteur recherché de dimension n et le vecteur de contrôle d'injecteur devant satisfaire au critère de minimisation

$$J := \sum_{i=1}^{i=n} x_i \to \min$$

**caractérisé en ce que**
le programme informatique comprend

    - une première routine de programme pour la réalisation assistée par ordinateur d'une transformation définie des conditions initiales selon la technique de matrice pour le flux de masse des injecteurs et du critère de minimisation,

- une deuxième routine de programme pour la réalisation assistée par ordinateur d'une représentation suivant la technique de traitement des données d'une description géométrique des conditions initiales transformées suivant la technique de matrice,

- une troisième routine de programme pour la réalisation assistée par ordinateur d'un procédé de recherche géométrique dans l'espace vectoriel pour effectuer un calcul assisté par ordinateur des ensembles de points de délimitation de la description géométrique des conditions initiales,

- une quatrième routine de programme pour l'application assistée par ordinateur du critère de minimisation transformé suivant la technique de matrice sur les points des ensembles de points de délimitation.

6. Produit de programme informatique comprenant un support de programme exploitable par une machine sur lequel un programme informatique selon la revendication 5 est enregistré sous la forme de signaux de commande à lecture électronique.

# FIG.1

$r_2$

$n_i$

$\lambda_i n_i$

Allowable
region for $r$

$r_1$

# FIG.2

$r_2$

$v_d$

Allowable
region for $r$

Value for $r=r_{opt}$
minimizing $J(r)$

$n_l$

$r_1$

$g_l$

# FIG.3

# FIG.4

# FIG. 5

# FIG.6

Computation time

Number of thrusters